# EUROPEAN PATENT APPLICATION

(11) **EP 3 871 967 A1**
(43) Date of publication of application: **01.09.2021**
(21) Application number: 21380002.2
(22) Date of filing: 12.02.2021
(51) Int. Cl.: B62L 1/10, B62L 3/02

(54) **HYDRAULIC DISC BRAKE ANTI-LOCK SYSTEM FOR BICYCLES (ABS)**

(30) Priority: 28.02.2020 ES 202000119 U
(71) Applicant: Quiñones de Ciaran, Francisco Javier, 33314 Villaviciosa, Asturias (ES)
(72) Inventor: Quiñones de Ciaran, Francisco Javier, 33314 Villaviciosa, Asturias (ES)

(57) **Abstract**

This invention refers to a mechanical anti-lock system of hydraulic brake for bicycle (mechanical ABS), which prevents the wheels from locking and slipping during excessive or abrupt braking, or the rider from being thrown over the handlebars. The system consists of a hydraulic cylinder (ABS cylinder) (23) attached to the bicycle fork (25), inside which are housed two opposing pistons (19 y 6), among which is an inlet tube (20) of hydraulic fluid pressure from the master cylinder and an outlet tube (8) of hydraulic fluid pressure connected to the slave cylinder (28). One of the pistons (19) has a rod (18) with a roller (14) at its end, which when the brake lever is operated and displaced by the pressure of the hydraulic fluid brings the roller (14) close to the corrugated profile of the brake disc (15) while it is rotating, providing discontinuous braking. The second piston (6), which is housed inside the same ABS cylinder (23) is also adjustable and prevents the mechanism (ABS), the brake system and the wheel from being blocked when the brake lever is operated in excess.

## Description

### Sector of the technique

The invention falls within the technical sector of systems applied to any type of hydraulic disc brake, as an integral part of these, to eliminate the risk of the wheels locking when braking and to reduce the space travelled by the vehicle from the moment the braking starts until it stops.

### State of the art

The field of application of the invention to be described is very broad, since the basis on which it is based is applicable to all types of hydraulic disc brakes. The present report describes this invention as applied to the hydraulic disc brake system of bicycles.

There are currently disc hydraulic brake systems for bicycles consisting of a master cylinder mounted on the handlebars, with a small integrated hydraulic fluid reservoir and a brake lever which, when activated exerts pressure on the piston of this cylinder, which according to Pascal's principle, transmits the force multiplied to the piston of the receiver cylinder through the tube through which the hydraulic fluid communicating them circulates, the diameter of the master cylinder being smaller than that of the slave. This slave cylinder is mounted on a caliper attached to the fork (front) or chassis (rear) of the bicycle and has brake pads between the piston of the slave cylinder and the disc, so that when the disc is pressed when the brake lever is operated the bicycle stops.

There are also anti-lock systems based on controlling braking by means of an adjustable system that limits the pressure exerted by the master cylinder piston on the slave cylinder piston, thus preventing the wheel from locking, but not reducing the space travelled by the bicycle from the moment the braking starts until it stops. These systems do not brake by discontinuous impulses, but only regulate and limit the pressure exerted on the slave cylinder piston.

There are devices similar to the one described in this report that reflect the state of the art related to it, which are indicated below:
A) The document with application number PCT/KR2016/011869 and international publication number WO2017I073965 refers to an ABS mechanical device applied to the hydraulic brake system of a bicycle, which uses the profile of the brake disc so that when this is turned, it pushes a lever, which at its end pushes another lever, which in turn pushes the rod of a piston, which by taking hydraulic fluid from a built-in reservoir sends it under pressure through a tube to the receiving cylinder, in a discontinuous manner when the brake lever is operated.
B) The document with application number CN201410445394 refers to an ABS mechanical device applied to the hydraulic brake system of a bicycle, which uses the profile of the brake disc so that when it turns, it pushes a rod, which in turn pushes a piston that sends the hydraulic liquid under pressure to the receiving cylinder, in a discontinuous manner when the brake lever is operated.

The problems posed by the known systems described above are as follows:
1.- Impossibility to control and regulate the start of the action of the anti-blocking system (ABS) of discontinuous impulses.
2.- Impossibility to prevent the locking of the wheel and the system due to excessively strong braking.
3.- The need for the first of the systems mentioned to have an additional hydraulic liquid tank integrated into the mechanism, in addition to the one that necessarily has the brake control installed on the handlebars of the bicycle.
4.- On the other hand, the first of the systems mentioned is not very compact and is somewhat more voluminous in its design, as it has levers and springs on the outside of the main body of the mechanism, being more vulnerable.

The present invention focuses on counteracting these disadvantages since it regulates the moment of braking when the ABS system begins to operate, providing discontinuous impulse braking and thus preventing the wheel on which it acts from locking and slipping, or if it is the front wheel this locks and the rider is thrown over the handlebars, since the problem with the hydraulic disc brakes known so far is that they are so effective as to be dangerous.

Another problem solved by the present invention in contrast to the systems currently known is that it is equipped with a safety mechanism that prevents the blocking of the brake system due to an excessively strong braking. The systems known until now, when the brake lever is operated excessively, not only block the wheel but also the mechanism itself, by transmitting the pressure exerted on the piston of the master cylinder by the action of the brake lever on the wheel or pusher that is in contact with the profile of the brake disc, not allowing the excessive pressure on the wheel or pusher to act on the piston and pump it in a discontinuous manner to produce the ABS effect.

In addition to counteracting the aforementioned disadvantages, the invention object of this memory does not require an additional integrated reservoir of hydraulic fluid, since it uses the same fluid that comes from the reservoir integrated in the brake actuation control installed on the handlebar.

On the other hand the present invention also counters the inconvenience of carrying levers and springs on the outside of the main body of the mechanism, being thus a more compact design and less vulnerable and bulky.

### Explanation of the invention

This invention refers to a mechanical anti-locking hydraulic disc brake system for bicycles (mechanical ABS), which prevents the wheels from locking and slipping during excessive or sudden braking, or the cyclist from being thrown over the handlebars, as has already happened on numerous occasions.

The system consists of a hydraulic cylinder (ABS cylinder) attached to the bicycle fork, inside which are housed two opposing pistons, among which is a hydraulic fluid pressure inlet tube coming from the master cylinder and a hydraulic fluid pressure outlet tube connected to the slave cylinder. One of the pistons has a rod with a roller at its end, which when the brake lever is operated and displaced by the hydraulic liquid pressure brings the roller closer to the corrugated profile of the brake disc as it rotates. When the roller passes through a convex zone it pushes the piston by applying pressure in the circuit and therefore on the slave cylinder and pads, the opposite effect being that the washer passes through a concave area and the piston stops exerting pressure in the circuit, thus braking is carried out by means of discontinuous impulses, being the piston of greater or smaller diameter, depending on the performance that is to be obtained. The start of the action of this piston is adjustable, which allows us to control when we want the anti-blocking system to start working, so that braking is by discontinuous impulses (ABS effect), which means that during normal driving when the brake lever is operated the bicycle will slow down and the ABS system will not work, but if the system is braked excessively or abruptly it will act, providing discontinuous braking, which will prevent the wheel from locking or slipping, as well as considerably reducing the space traveled from the moment the brake lever is operated until the bicycle comes to a complete stop. The second piston inside the ABS cylinder is also adjustable and prevents the excess pressure from blocking the mechanism and therefore the brake system and the wheel when the brake lever is operated excessively. This piston may have a larger or smaller diameter, depending on the performance required.

The system described is very light and of reduced dimensions, and can be installed on all types of bicycles, both for front and rear wheels, mounting it as standard or as an adaptable kit maintaining the same master cylinder and slave cylinder, as any existing hydraulic disc brake system is fully compatible with this invention. For installation as an adaptable kit it is only necessary to insert the hydraulic cylinder (ABS cylinder) which is the subject of this invention in the brake circuit, fixing this cylinder to the bicycle fork, changing the brake disc for one with the corrugated profile (alternate concave-convex), adding hydraulic fluid to the circuit and bleeding it.

### Brief description of the drawings

For a better understanding of this invention as applied to the brake system of a bicycle and for guidance purposes only and not limiting, each of the components numbered in the figures accompanying this report is detailed below. This numbering is the same for both figures. That is to say, the components which are repeated in more than one figure are in all of them with the same number.

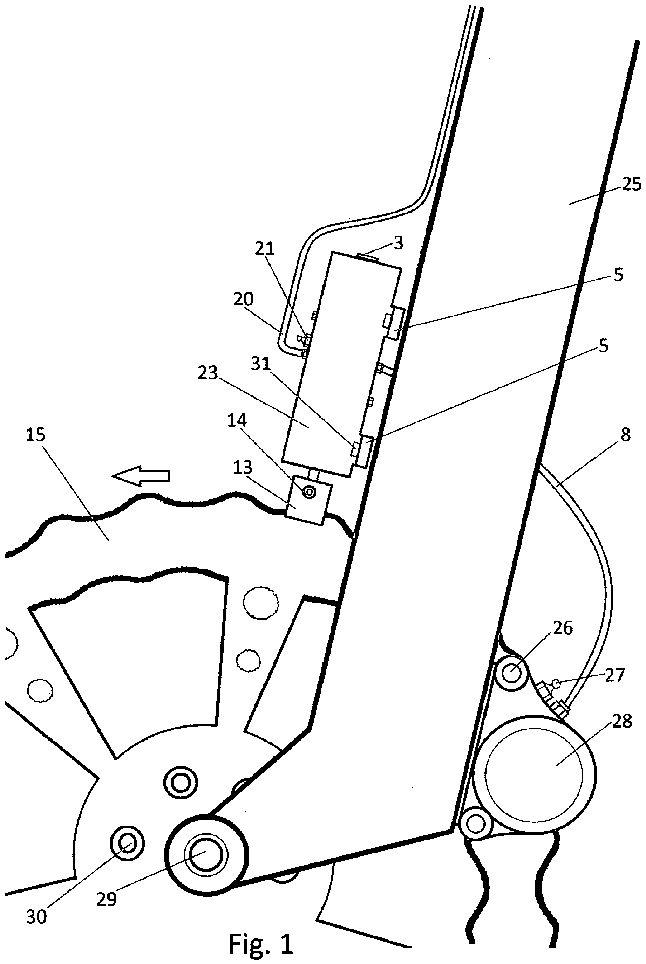

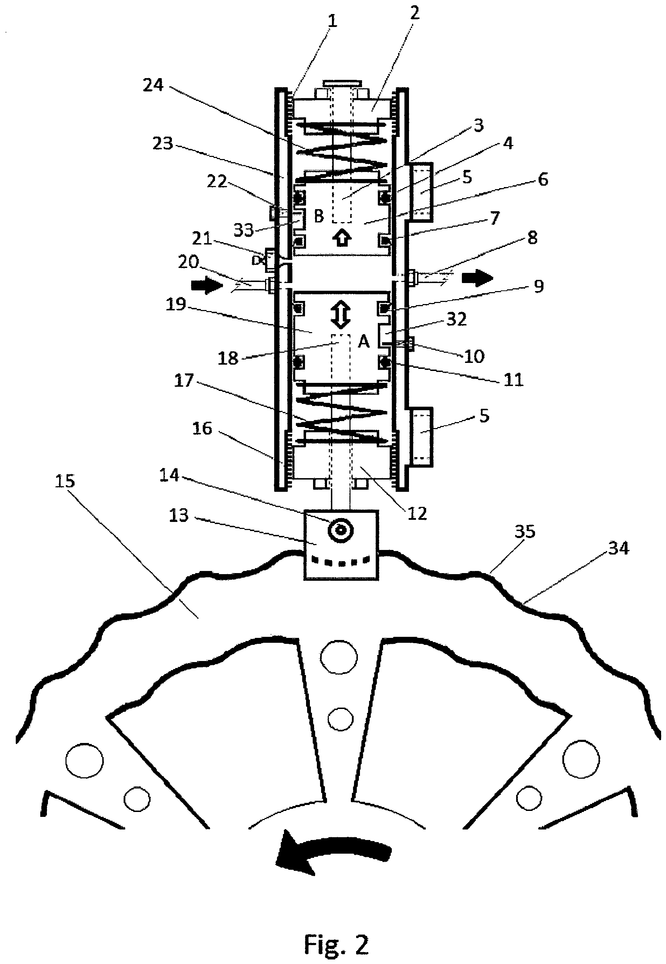

Figure 1 shows a side view of the device as it is mounted on the bicycle and Figure 2 shows a sectioned view of the inside of the ABS cylinder.

### Figures 1 and 2:

1 - Piston "B" regulation thread (Fig. 2)
2 - Threaded plug of over pressure regulation (Fig. 2)
3 - Rod of threaded plug of over pressure regulation (Fig. 1 and 2)
4 - 2nd Rubber ring of the excess pressure regulator piston (Fig. 2)
5 - ABS cylinder support (Fig. 1 and 2)
6 - Piston "B" (Fig. 2)
7 - 1st Piston rubber ring "B" (Fig. 2)
8 - Pressure tube to slave cylinder (Fig. 1 and 2)
9 - 1st Piston rubber ring "A" (Fig. 2)
10 - Piston travel stop "A" (Fig. 2)
11 - 2nd Piston rubber ring "A" (Fig. 2)
12 - Threaded plug for abs start adjustment (Fig. 2)
13 - Roller guide rail (Fig. 1 and 2)
14 - Roller (Fig. 1 and 2)
15 - Brake disc (Fig. 1 and 2)
16 - Piston "A" regulation thread (Fig. 2)
17 - Piston spring "A" (Fig. 2)
18 - Piston pusher "A" (Fig. 2)
19 - Piston "A" (Fig. 2).
20 - Pressure tube from master cylinder (Fig. 1 and 2)
21 - Hydraulic liquid bleeder (Fig. 1 and 2)
22 - Piston travel stop "B" (Fig. 2)
23 - ABS hydraulic cylinder (Fig. 1 and 2)
24 - Piston spring "B" (Fig. 2)
25 - Bicycle fork (Fig. 1)
26 - Screw for fixing brake caliper to fork (Fig. 1)
27 - Slave cylinder hydraulic liquid bleeder (Fig. 1)
28 - Slave cylinder (Fig. 1)
29 - Wheel axle (Fig. 1)
30 - Brake disc to hub fixing screw (Fig. 1)
31 - Screw to fix the ABS cylinder to the bicycle fork (Fig. 1)
32 - Piston travel channel "A" (Fig. 2)
33 - Piston travel channel "B" (Fig. 2)
34 - Concave area of the brake disc (Fig. 2)
35 - Convex area of the brake disc (Fig. 2)

### Detailed explanation of a mode of realisation of the invention

As an example we present a case of practical implementation of the "Hydraulic disc brake anti-lock system for bicycles (ABS)", which is the subject of this invention. A variety of materials can be used to make this invention and put it into operation.

A hydraulic cylinder (23) with two fixing points (5) to the fork (25), which has two opposite pistons "A" and "B" (19 and 6) housed inside it. Piston "A" (19) is connected to a rod (18) which at the other end has a roller (14) with a rail (13) which acts as a guide, this piston (19) has two rubber rings (9 and 11) and its stroke is limited by a fixed stop (10) which runs through a channel (32) and also has a spring (17) whose pressure is adjustable by means of a threaded stop (12). This piston "A" (19) is smaller in diameter than the master cylinder from which it receives its pressure from the hydraulic fluid when the handlebar-mounted brake lever is operated and its travel limited by the stop (10) running through the channel (32) is equal to the difference in millimetres between the concave (34) and convex (35) areas of the brake disc profile (15).

Piston "B" (6) is connected to a rod (3) which has a stop at the other end, this piston (6) also has two rubber rings (7 and 4) and its stroke is limited by a fixed stop (22) which runs through a channel (33), as well as having a spring (24) whose pressure is regulated by a threaded stop (2). This piston "B" (6) has a similar diameter to that of the piston "A" (19).

The hydraulic cylinder (23) has a tube (20) for hydraulic fluid pressure input from the handlebar master cylinder, this tube (20) goes directly into the hydraulic cylinder (23) between the two opposite pistons "A" and "B" (19 and 6). In the same way, it has a pressure output tube (8) connected to the slave cylinder (28). The hydraulic cylinder (23) has a bleeder (21) threaded between the two opposite pistons "A" and "B" (19 and 6).

The result of this system is as follows:
The pressure exerted on the master cylinder by compressing its piston through the action of the brake lever mounted on the handlebar of the bicycle, reaches the inside of the hydraulic cylinder (23) between the two opposite pistons "A" and "B" (19 and 6), as well as the slave cylinder through a tube (20). The hydraulic cylinder (23) inserted in the circuit and its component parts, which are the subject of this invention, produce an effect on this pressure which has several distinct phases. As an example of how to differentiate these phases the following assumptions are made:

### FIRST

**Action:** Initiation of normal braking by exerting little force on the brake lever.

**Effect:** The pressure is supplied by hydraulic fluid to the slave cylinder (28), passing through the hydraulic cylinder (23), compressing the pads on both sides of the brake disc (15) and stopping the bicycle.

### SECOND

**Action:** Abrupt and sudden braking or needing to stop the bicycle in a short space, exerting considerable force on the brake lever.

**Effect:** Excessive pressure that could block the bicycle wheel is supplied by hydraulic fluid to the slave cylinder (28), passing through the hydraulic cylinder (23) and moving piston "A" (19), which in principle reduces the pressure as well as bringing the rod (18) of piston "A" (19) with the roller (14) and guide rail (13) closer to the corrugated profile of the disc (15), being pushed by turning the disc (15) and rolling the roller (14) through a convex area (35), with piston "A" (19) exerting pressure on the circuit and therefore on the slave cylinder (28) and pads. The opposite effect occurs when the roller (14) passes through a concave area (34) and the piston "A" (19) stop exerting pressure on the circuit. These two opposing effects are what produce the anti-lock braking effect (ABS) as the discontinuous pulses prevent the wheel from locking and reduce the braking space. The braking moment at which piston "A" (19) begins to move and therefore the anti-lock braking system (ABS) comes into operation can be adjusted by means of a threaded stop (12) exerting more or less pressure on the spring (17) of piston "A" (19) so that this with the rod (18) and the roller (14) moves towards the profile of the brake disc (15) at the desired moment of braking, depending on the pressure exerted.

The profile of the brake disc (15) has the same number of concave areas (34) as convex areas (35) and depending on the number of these is the number of pulses that the hydraulic cylinder (23) sends to the slave cylinder (28) for each complete revolution of the brake disc (15) and the wheel. The greater the difference in millimetres between the concave areas (34) and the convex areas (35) of the brake disc profile (15) the more travel the piston "A" (19) makes inside the hydraulic cylinder (23) and the more pressure it exerts on the slave cylinder (28).

### THIRD

**Action:** Abrupt and sudden braking or the need to stop the bicycle in a short space by exerting extreme force on the brake lever.

**Effect:** The effect would be the same as in the second scenario above, with the difference that in the case of extreme pressure in the brake circuit and so that the pressure exerted by the brake lever cannot overcome the action of piston "A" (19), this pressure is reduced when piston "B" (6) moves outside, increasing the capacity of the interior of the hydraulic cylinder. This piston "B" (6) can be regulated by means of a threaded stop (2) which exerts more or less pressure on the spring (24) of piston "B" (6), so that it acts as a safety system if the pressure in the circuit is exceeded.

The stroke of piston "B" (6) when it performs its function to reduce excess pressure in the hydraulic circuit will depend on the length of the channel (33) through which it runs, and in which is the stop (22) that limits it runs, the design can be made so that it reduces more or less the pressure inside the circuit, depending on the greater or lesser length of this channel (33).

## Claims

1. Mechanical anti-lock system of hydraulic disc brake for bicycles (ABS), which has a hydraulic cylinder fixed to the bicycle fork, inside which there are two opposite pistons, among which there is an entry tube of hydraulic liquid pressure coming from the master cylinder and an exit tube of hydraulic liquid pressure connected to the slave cylinder. One of the pistons has a rod with a roller at its end, which when the brake lever is operated and displaced by the pressure of the hydraulic fluid brings the roller close to the corrugated profile of the brake disc while the disc is rotating. When the roller passes through a convex area it pushes the piston exerting pressure on the circuit and therefore on the slave cylinder and the pads, the opposite effect occurs when the roller passes through a concave area and this piston stop exerting pressure on the circuit, thus performing braking by means of discontinuous pulses. The start of the action of this piston is adjustable, which allows us to control when we want the anti-blocking system to start working, so that braking is by discontinuous impulses (ABS effect). The system has a second piston housed inside the hydraulic cylinder so that in the event of extreme pressure in the brake circuit, this pressure is reduced as the piston moves outwards, increasing the capacity of the inside of the hydraulic cylinder. This safety system is regulated by means of a threaded stop that exerts more or less pressure on the spring of second piston, so that it moves and acts at the desired moment, **characterized by** a hydraulic cylinder (23) with two fixing points (5) to the fork (25), which has two opposite pistons "A" and "B" (19 and 6) housed inside it. The "A" piston (19) is connected to a rod (18) which at its other end has a roller (14) with a rail (13) as a guide, this piston (19) has two rubber rings (9 and 11) and its stroke is limited by a fixed stop (10), which runs through a channel (32) and also has a spring (17) whose pressure is adjustable by means of a threaded stop (12). Its travel is equal to the difference in millimetres between the concave (34) and convex (35) areas of the brake disc profile (15). Piston "B" (6) is connected to a rod (3) which has a stop at the other end, this piston (6) has two rubber rings (7 and 4) and its stroke is limited by a fixed stop (22), and it also has a spring (24) whose pressure is regulated by a threaded stop (2). The hydraulic cylinder (23) has a tube (20) for the entry of hydraulic liquid pressure from the handlebar master cylinder, this tube (20) enters directly into the hydraulic cylinder (23) between the two opposite pistons "A" and "B" (19 and 6). There is also a pressure outlet tube (8) connected to the slave cylinder (28). The hydraulic cylinder (23) has a bleeder (21) threaded between the two opposite pistons "A" and "B" (19 and 6).

2. Mechanical anti-lock system of hydraulic brake for bicycle (ABS) in accordance with claim 1, **characterized by** having an piston "A" (19) of greater or lesser diameter, depending on the performance to be obtained.

3. Mechanical anti-lock system of hydraulic brake for bicycle (ABS) in accordance with claims 1 and 2, **characterized by** having a piston "B" (6) of greater or lesser diameter, depending on the performance to be obtained.

4. Mechanical anti-lock system of hydraulic brake for bicycle (ABS) according to claims 1, 2 and 3, **characterized by** having a brake disc (15) with a profile whose number of alternating concave (34) and convex (35) areas depends on the number of pulses to be achieved from the hydraulic system (ABS) each time the brake disc (15) makes a full turn (360°).

5. Mechanical anti-lock system of hydraulic brake for bicycle (ABS) in accordance with claims 1, 2, 3 and 4, **characterized by** having a brake disc (15) whose alternate areas of the profile, concave (34) and convex (35), have more or less accentuated their concavity and their convexity, depending on the stroke to be obtained from the piston "A" (19) of the hydraulic system (ABS).
